# FASCICULE DE BREVET EUROPEEN

(11) **EP 4 305 384 B1**
(45) Date de publication et mention de la délivrance du brevet: **30.09.2026**
(21) Numéro de dépôt: 22713981.3
(22) Date de dépôt: 11.03.2022
(51) Int. Cl.: G01C 21/16

(54) **PROCEDE D'AIDE A LA NAVIGATION D'UN VEHICULE**
VERFAHREN ZUR UNTERSTÜTZUNG DER NAVIGATION EINES FAHRZEUGS
METHOD FOR ASSISTING WITH THE NAVIGATION OF A VEHICLE

(30) Priorité: 11.03.2021 FR 2102423
(43) Date de publication de la demande: 17.01.2024
(73) Titulaire: SAFRAN, 75015 Paris (FR)
(72) Inventeur: BARRAU, Axel, 77550 MOISSY-CRAMAYEL (FR)
(74) Mandataire: Regimbeau
(86) Numéro de dépôt international: PCT/FR2022/050443
(87) Numéro de publication internationale: WO 2022/189761

(56) Documents cités:
- US-A1- 2020 088 521

## Description

### DOMAINE DE L'INVENTION

La présente invention concerne le domaine des procédés de navigation d'un véhicule. Elle concerne plus particulièrement les procédés de navigation dits hybrides.

### ETAT DE LA TECHNIQUE

Les procédés de navigation hybrides sont des procédés dans lesquels des mesures issues de plusieurs capteurs (accéléromètres, gyroscopes, GPS, etc.) sont fusionnées afin de déterminer des variables ou informations cinématiques définissant l'état d'un dispositif mettant en œuvre le procédé.

Par exemple, le document US 2020/088521 A1 décrit un système de navigation comprenant plusieurs unités de mesure inertielle, chacune associée à un filtre de Kalman, ainsi qu'un capteur commun tel qu'un système GPS, dans lequel les bruits et les variances des capteurs sont pris en compte lors du réglage des gains utilisés pour la fusion des différentes solutions de positionnement.

Ces variables cinématiques sont, par exemple, une position, une vitesse ou une orientation du dispositif.

Les mesures sont, par exemple, des mesures inertielles, par exemple obtenues d'accéléromètres et de gyroscopes, comme la force spécifique, la vitesse angulaire ou vitesse de rotation du dispositif, des mesures de vitesse ou des mesures de position du dispositif. La force spécifique est la somme des forces extérieures autres que gravitationnelles divisée par la masse. Cette quantité a donc la dimension d'une accélération

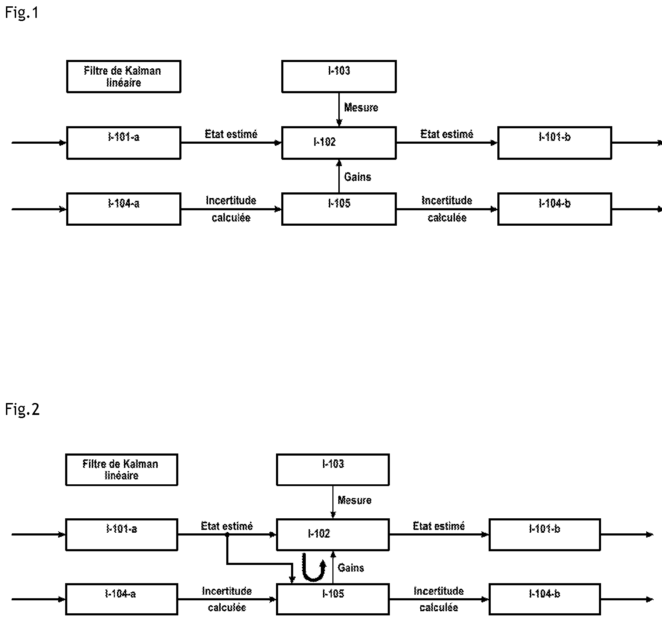

On connaît les filtres de Kalman linéaires dont un exemple est représenté sur la figure 1. Sur la ligne du milieu, on voit que l'état estimé subit une série de propagations (utilisant les mesures inertielles) et de mises à jour (utilisant un capteur additionnel comme un récepteur GPS ou un odomètre, une caméra, etc.). Les mises à jour sont des corrections de la valeur de l'état estimé prenant en compte la nouvelle mesure issue du capteur additionnel. Le capteur ne donne pas la correction à apporter, il donne seulement une mesure dépendant des variables à estimer. La différence entre cette mesure et la valeur estimée du paramètre cinématique est appelée "innovation". Pour transformer cette innovation en une correction **de l'état** du dispositif, une matrice K dite « de gains » est nécessaire. Elle est calculée à partir de l'équation de Riccati apparaissant sur la ligne du bas. Cette équation entretient une incertitude (ou « matrice de covariance ») permettant de construire la matrice de gains. Si l'estimation de l'état est fausse, les mesures combinées aux matrices de gains permettront de la corriger au fil du temps.

Cependant ces filtres de Kalman linéaires ne peuvent pas fonctionner dans le cas où le modèle décrivant l'état à estimer n'est pas linéaire. Dans ce cas, il faut utiliser un filtre de Kalman non linéaire (ou « étendu ») représenté sur la figure 2.

Sur la figure 2, on représente par la flèche allant de la ligne du milieu à la ligne du bas l'état estimé du dispositif. Cet état estimé est utilisé pour calculer l'incertitude et les gains. Par conséquent, une rétroaction apparaît et une erreur sur l'état estimé induit une erreur sur les gains qui induit à son tour une erreur sur l'état estimé. La stabilité d'un filtre de Kalman étendu dépend entièrement de l'intensité de cette rétroaction.

Cette rétroaction n'est pas intrinsèque au système considéré et dépend du système de coordonnées utilisé, qui a une grande importance pour le filtrage de Kalman étendu. Plus précisément, la rétroaction dépend des coordonnées utilisées pour la représentation des erreurs, appelées « variables d'erreurs ». Un système de variables d'erreur courant pour le filtrage de Kalman étendu est simplement (avec *T, V,* X les variables d'orientation, de vitesse et de position) : ${e}_{T} = {\hat{T}}^{- T} T$ ${e}_{V} = V - \hat{V}$ ${e}_{X} = X - \hat{X}$

Un système de variables d'erreurs utilisé pour construire un filtre invariant de fusion inertie-GPS et permettant de supprimer presque entièrement la rétroaction est : ${e}_{T} = {\hat{T}}^{- T} T$ ${e}_{V} = {\hat{T}}^{- T} \left(V-\hat{V}\right)$ ${e}_{X} = {\hat{T}}^{- T} \left(X-\hat{X}\right)$

Un système de variables d'erreurs utilisé pour construire un filtre invariant de fusion inertie-odométrie et permettant de supprimer presque entièrement la rétroaction est : ${e}_{T} = T {\hat{T}}^{- T}$ ${e}_{V} = V - T {\hat{T}}^{- T} \hat{V}$ ${e}_{X} = X - T {\hat{T}}^{- T} \hat{X}$

Mais aucun des deux systèmes de variables d'erreurs précédents ne permet de supprimer fortement la rétroaction à la fois pour la fusion inertie-GPS et la fusion inertie-odométrie. En particulier, aucun ne permet de fusionner dans un même filtre des mesures inertielles, des mesures de position et des mesures de vitesse odométrique. L'invention rend possible cette fusion à l'aide de la dernière variable d'erreur définie ci-dessus.

On connait aussi l'utilisation de deux filtres utilisant indépendamment les mesures des capteurs de position et des capteurs d'odométrie. Cependant ceci ne permet pas de fusionner ces mesures et donc le résultat est sousoptimal et correspond approximativement à la performance du meilleur des deux filtres.

Il y a donc un besoin pour un nouveau type de procédé de navigation qui permet de fusionner des mesures de position et des mesures d'inertie.

### EXPOSE DE L'INVENTION

L'invention propose de remédier aux inconvénients précités.

A ce titre, l'invention propose, selon un premier aspect, un procédé d'aide à la navigation d'un véhicule doté d'un dispositif de navigation selon la revendication 1 annexée.

Ainsi ce procédé permet de déterminer la valeur des variables cinématiques du dispositif de navigation. Il offre une navigation plus précise en combinant toutes les mesures disponibles dans un même filtre.

Un autre aspect de l'invention concerne un dispositif de navigation selon la revendication 11 annexée.

Un autre aspect de l'invention concerne un produit programme d'ordinateur selon la revendication 12 annexée.

### DESCRIPTION DES FIGURES

D'autres caractéristiques et avantages de l'invention ressortiront encore de la description qui suit, laquelle est purement illustrative et non limitative et doit être lue en regard des figures annexées sur lesquelles :La figure 1 représente un filtre de Kalman linéaire.
La figure 2 représente un filtre de Kalman étendu.
La figure 3 représente un dispositif de navigation de l'invention.
La figure 4 représente un mode de réalisation du procédé de navigation de l'invention.
La figure 5 illustre le fonctionnement du procédé de navigation.
La figure 6 illustre le fonctionnement du procédé de navigation.
La figure 7 représente un deuxième mode de réalisation du procédé de navigation de l'invention.
La figure 8 représente d'une autre manière le deuxième mode de réalisation du procédé de navigation de l'invention.

### DESCRIPTION DETAILLEE DE L'INVENTION

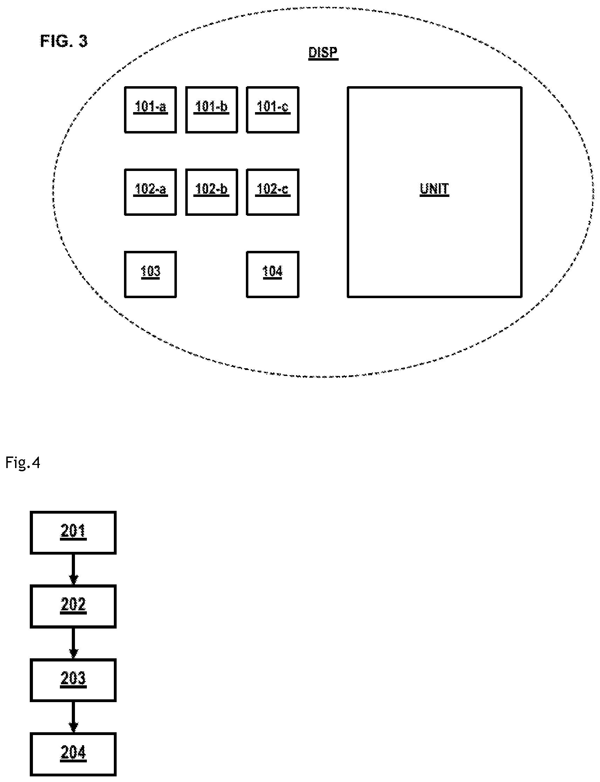

La figure 3 représente de manière schématique un dispositif de navigation DISP. Ce dispositif de navigation DISP comprend une unité de traitement UNIT. Cette unité de traitement UNIT comprend un processeur ou un microcontrôleur à usage général ou spécifique et une mémoire.

Le processeur ou le microcontrôleur peut être un circuit intégré spécifique à une application (*Application-Specific Integrated Circuit* pour ASIC en anglais), il peut aussi être un circuit logique programmable ou réseau logique programmable (*Field-Programmable Gate Array* pour FPGA en anglais).

La mémoire peut être fixe ou amovible et comporter différentes unités mémoire pouvant inclure une combinaison d'unités permettant un stockage volatile et non volatile. La mémoire est configurée pour stocker un code logiciel utilisable par le processeur ou le microcontrôleur pour réaliser un procédé de détermination de valeurs respectives de variables cinématiques du dispositif de navigation DISP.

Les valeurs des variables cinématiques permettent la localisation du dispositif de navigation DISP et donc la navigation du porteur de ce dispositif.

Le dispositif de navigation DISP comprend également
- trois accéléromètres 101-a à 101-c,
- trois gyroscopes 102-a à 102-c et
- un dispositif de mesure 103 d'une position du dispositif de navigation DISP.

Le dispositif de navigation DISP peut aussi comporter d'autres dispositifs de mesures d'une variable cinématique, d'une combinaison de plusieurs variables cinématiques, ou de variables supplémentaires estimées également par le filtre de Kalman du dispositif de navigation DISP.

De plus, le dispositif de navigation DISP peut aussi comporter un dispositif de mesure 104 d'une distance parcourue par le porteur du dispositif de navigation DISP. Ce dispositif de mesure 104 est par exemple un odomètre 104.

Les trois accéléromètres 101-a à 101-c sont aptes à délivrer des données de force spécifique. Les trois accéléromètres sont associés respectivement à trois axes qui peuvent être orthogonaux entre eux.

Les trois gyroscopes 102-a à 102-c sont aptes à délivrer des données de vitesse angulaire. Les trois gyroscopes sont associés respectivement à trois axes qui peuvent être orthogonaux entre eux.

Plus précisément, les accéléromètres mesurent une force spécifique *fₙ* du dispositif de navigation DISP et les gyroscopes mesurent une vitesse angulaire du dispositif de navigation DISP. Cette vitesse angulaire est ensuite transformée en une matrice de rotation *Ωₙ* représentative de la rotation du dispositif. L'intervalle de temps entre deux mesures est noté *dt.*

Accéléromètres et gyroscopes peuvent soit fournir des forces spécifiques et des vitesses angulaires, soit directement des variations de vitesse et d'angle.

Le dispositif de mesure 103 d'une position du dispositif de navigation DISP est par exemple :
- un récepteur de navigation satellitaire, par exemple un récepteur de type GPS pour *Global Positionning System* en anglais ou un récepteur de type Galiléo,
- un dispositif réalisant une triangulation en utilisant des amers dont la position est connue ou
- un dispositif de télédétection par laser (*Light Detection And Ranging* pour LIDAR en anglais) d'un ensemble d'amers connus permettant de calculer la position du véhicule.

Dans le cas où le dispositif de mesure 103 d'une position n'est pas colocalisé avec le dispositif de navigation DISP, la distance entre le dispositif de mesure 103 et le dispositif de navigation DISP est considérée comme un biais constant sur la mesure virtuelle de la position de la balise dans le repère du porteur. Cette mesure virtuelle est définie ci-dessous. Ce biais est par exemple connu ou estimé au moment de la mise en œuvre du procédé de l'invention.

Les données délivrées par les trois accéléromètres 101-a à 101-c, par les trois gyroscopes 102-a à 102-c, par le dispositif de mesure 103 d'une position et éventuellement par l'odomètre 104 sont reçues par l'unité de traitement UNIT.

L'unité de traitement UNIT est configurée par la mise en œuvre du procédé de navigation via la détermination de valeurs respectives de variables cinématiques du dispositif de navigation DISP. Ce procédé est représenté en figure 4. Il permet donc la localisation du dispositif de navigation DISP et donc la navigation du porteur de ce dispositif.

Le procédé de la figure 4 comprend les étapes suivantes :
- acquisition 201 de variables cinématiques a priori du dispositif de navigation,
- détermination 202 de valeurs courantes respectives de variables cinématiques d'un dispositif de navigation DISP et d'une matrice d'incertitude courante représentative d'une incertitude des valeurs courantes respectives des variables cinématiques, à partir de valeurs précédentes respectives des variables cinématiques et d'une matrice d'incertitude précédente représentative d'une incertitude des valeurs précédentes respectives des variables cinématiques,
- détermination 203 d'une correction à partir :
- des valeurs courantes respectives des variables cinématiques et
- d'une mesure d'une des variables cinématiques et
- d'une matrice de gain dépendante de la mesure,
- mise à jour 204 des valeurs courantes respectives des variables cinématiques et de la matrice d'incertitude courante à partir de la correction.

La correction est calculée par une matrice de transformation ou matrice de gains (notée *K* par la suite). Cette matrice de gain *K* est calculée à partir d'une matrice d'observation (notée *H* par la suite). La matrice d'observation *H* dans l'état de la technique relie au premier ordre une erreur d'estimation de l'état du système à une erreur de prédiction de la mesure GPS. La matrice de gain *K* utilisera la matrice d'observation *H* pour effectuer l'opération inverse : déterminer une correction de l'état à partir d'une erreur de prédiction de la mesure constatée.

Dans l'invention, la matrice d'observation *H* et l'innovation *z* (la différence de la valeur courante d'une des variables cinématiques et de la mesure de la variable cinématique) ne sont plus associées à la mesure réelle de position fournie par le GPS mais à une mesure virtuelle de position du point indiqué par le GPS dans le repère du porteur. Comme dans les techniques d'observation virtuelle de vitesse mentionnées par la suite, la valeur donnée à cette observation virtuelle sera zéro.

Dans un filtre de Kalman (linéaire, étendu ou invariant) on définit une observation comme une fonction de l'état prédisant la mesure d'un capteur par exemple un récepteur GPS fournissant une observation de position ou un odomètre fournissant une observation de vitesse dans le repère du porteur.

Le filtrage de Kalman utilise une matrice H reliant au premier ordre l'erreur d'estimation de l'état à une erreur de prédiction de la mesure.

On définit une observation virtuelle comme une fonction de l'état sur laquelle on dispose d'une information qui ne provient pas nécessairement d'un capteur.
- Une détection de l'arrêt d'un véhicule se modélise comme une observation virtuelle de vitesse dans le repère géographique, dont la mesure serait zéro.
- Une détection de l'arrêt d'un véhicule peut aussi se modéliser comme une observation virtuelle de vitesse dans le repère du véhicule (comparable à celle que donnerait un odomètre), dont la mesure serait zéro.

Une information modélisée par une observation virtuelle peut être assimilée à l'aide d'un filtre de Kalman, qui utilise une matrice H reliant au premier ordre l'erreur d'estimation de l'état à une erreur de prédiction de la mesure virtuelle. En particulier, le fait d'avoir ou pas un capteur fournissant cette mesure ne fait pas de différence. Par contre, une même information assimilée à travers des observations virtuelles différentes conduit à des filtres de Kalman différents (comme c'est le cas pour l'exemple de détection d'arrêt ci-dessus). Les filtres obtenus auront en général un comportement similaire pour de petites erreurs d'estimation initiales, mais différent pour des erreurs d'estimations initiales plus grandes.

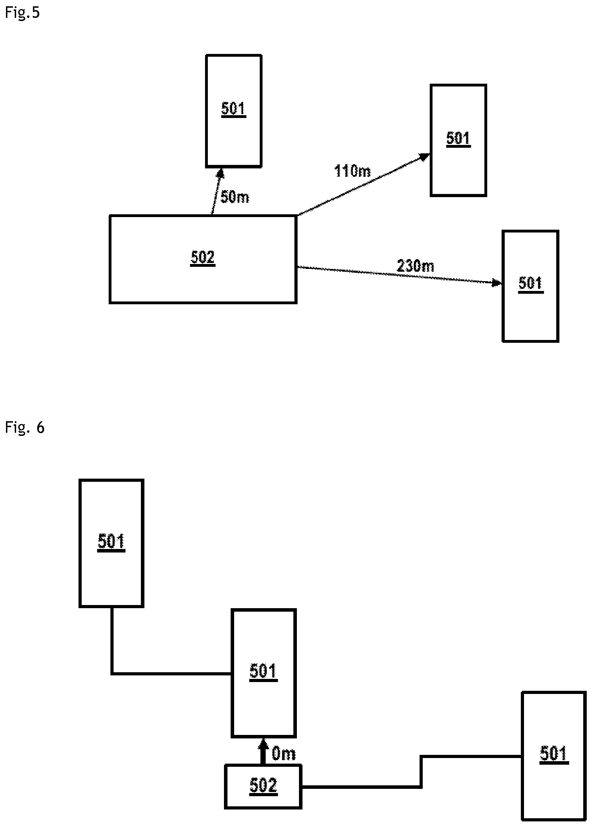

L'invention est un procédé de fusion de mesures inertielles avec des mesures GPS, mais elle repose sur la notion de recalage sur amers représentée sur la figure 5. Une série de points de repère sont connus et cartographiés à l'avance (éléments 501 sur la figure 5). Le véhicule 502, portant le dispositif de navigation DISP, a la capacité de mesurer leur distance et leur direction (seule la distance est écrite sur les flèches). Cette information, combinée aux mesures inertielles, lui permet de connaître sa trajectoire (positions, vitesses, orientations). Les (nombreux) algorithmes permettant ce type de recalage sont différents des algorithmes permettant de corriger sa position à l'aide du dispositif de mesure d'une position 103 par exemple un GPS.

De plus, tel que représenté sur la figure 6, dans le cas particulier où le véhicule passe sur chaque amer une fois, et ne voit l'amer qu'à l'instant exact de son passage, où la distance relative de l'amer est de zéro, l'algorithme de recalage choisi recherchera une trajectoire passant par tous les amers, et compatible avec l'inertie. On voit qu'il résout alors le même problème qu'un algorithme de fusion inertie-GPS qui aurait reçu des mesures GPS situés exactement sur les positions des amers. Ainsi dans l'invention on fournit à un module de recalage sur amers une série d'amers virtuels situés sur les positions mesurées par le GPS, accompagnés d'une mesure (virtuelle aussi) de distance égale à zéro. Le module cherchera donc bien à recaler la position du véhicule sur celle des points GPS. Ceci permet d'obtenir un procédé de navigation qui ne présente pas les défauts des procédés connus.

Les variables cinématiques du dispositif comprennent :
- une orientation du dispositif, dont la valeur est une matrice *T* d'orientation actuelle ou précédente, de taille 3 par 3, cette orientation peut aussi être représentée par un quaternion,
- une vitesse du dispositif, dont la valeur est un vecteur *V* de vitesse actuel ou précédent, de taille 3, et
- une position du dispositif, dont la valeur est un vecteur *X* de position actuel ou précédent, de taille 3.

De plus on utilise une matrice d'incertitude *P* représentative d'une incertitude des variables cinématiques. Cette matrice est une matrice de covariance.

Dans la suite du document, les paramètres (matrice ou vecteur) portant un accent circonflexe représentent des paramètres estimés, les paramètres réels correspondants sont notés sans accent circonflexe.

Le procédé comprend la détermination de la valeur de ces paramètres qui sont notés respectivement *T̂*_{*n*|*n*}, *V̂*_{*n*|*n*} et *X̂*_{*n*|*n*}. Le procédé comprend aussi la détermination de la matrice de covariance *P*_{*n*|*n*} représentative de l'incertitude de l'estimation actuelle. On suppose aussi qu'une matrice de covariance *P*_{0|0}, représentant l'incertitude initiale, est disponible au début de la navigation.

L'indice *n* représente ici le pas de temps et, de manière classique dans un filtrage de Kalman, l'indice *n*|*n* représente l'estimation de la valeur à l'instant *n* en tenant compte de l'observation effectuée à l'instant *n* et l'indice *n*|*n*-*1* représente l'estimation de la valeur à l'instant *n* sans tenir compte de l'observation effectuée à l'instant *n.*

Le procédé de l'invention utilise un filtre de Kalman (de manière plus précise un filtre de Kalman invariant), où se succèdent des phases de propagation (comprenant la détermination 202) utilisant les mesures inertielles, et des phases de mise à jour (comprenant la détermination 203 d'une correction et la mise à jour 204) utilisant les données de position délivrées par le dispositif 103 de mesure d'une position.

La détermination 202 utilise les équations suivantes : ${\hat{V}}_{n \left|n-1\right.} = {\hat{V}}_{n - 1 \left|n-1\right.} + dt . \left({\hat{T}}_{n - 1 \left|n-1\right.}{f}_{n}+{g}_{n}\right)$ ${\hat{X}}_{\left.n\right| n - 1} = {\hat{X}}_{\left.n-1\right| n - 1} + dt . {\hat{V}}_{\left.n-1\right| n - 1}$ ${\hat{T}}_{\left.n\right| n - 1} = {\hat{T}}_{\left.n-1\right| n - 1} {Ω}_{n}$ ${P}_{\left.n\right| n - 1} = {F}_{n} {P}_{\left.n-1\right| n - 1} {F}_{n}^{T} + {Q}_{n}$

Avec :
- *V̂*_{*n*|*n*-1} est le vecteur vitesse courant,
- *V̂*_{*n*-1|*n*-1} est le vecteur vitesse précédent,
- *X̂*_{*n*|*n*-1} est le vecteur position courant,
- *X̂*_{*n*-1|*n*-1} est le vecteur position précédent,
- *T̂*_{*n*|*n*-1} est la matrice d'orientation courante,
- *T̂*_{*n*-1|*n*-1} est la matrice d'orientation précédente,
- *gₙ* est un modèle de la gravité subie par le dispositif de navigation DISP
- *fₙ* est la force spécifique issue des accéléromètres
- *Ωₙ* est la matrice de rotation issue des gyroscopes ${F}_{n} = \left(\begin{matrix}{I}_{3} & {0}_{3} & {0}_{3} \\ dt {\left({g}_{n}\right)}_{\times } & {I}_{3} & {0}_{3} \\ {0}_{3} & dt . {I}_{3} & {I}_{3}\end{matrix}\right)$
- *Qₙ* est une matrice de covariance représentant l'incertitude ajoutée par chaque étape de propagation des variables cinématiques. La source principale de cette incertitude est l'imprécision des mesures issues des accéléromètres et des gyroscopes. La valeur exacte à donner à *Qₙ*

**est en général** difficile à choisir mais peut l'être à l'aide des spécifications fournies par le constructeur du dispositif de navigation DISP.
- (*l*)_{×} correspond à une matrice antisymétrique réalisée avec les composantes du vecteur *l*, cette matrice est telle que pour tout vecteur *u* (*l*)_{×}*u* = *l* × *u* où × est un produit vectoriel.
- *P* est une matrice de covariance dont les valeurs de la diagonale représentent les incertitudes de chaque paramètre de l'état et dont les valeurs qui ne sont pas sur la diagonale représentent les incertitudes croisées entre les paramètres. *P*_{*n*-1|*n*-1} est la matrice d'incertitude précédente, *P*_{*n*|*n*-1} est la matrice d'incertitude courante.

Dans un mode de réalisation l'étape 203 de détermination d'une correction *ds* utilise une mesure de la position du dispositif de navigation DISP, via les équations suivantes : ${z}_{n} = {\hat{X}}_{\left.n\right| n - 1} - {Y}_{n}$ ${K}_{n} = {P}_{\left.n\right| n - 1} {H}_{n}^{T} {\left({H}_{n}{P}_{\left.n\right| n - 1}{H}_{n}^{T}+{R}_{n}\right)}^{- 1}$ $ds = {K}_{n} {z}_{n}$

Avec :
- *ds* la correction.
- *Yₙ* la position fournie par le dispositif de mesure d'une position 103.
- *Rₙ* une matrice de covariance utilisée pour représenter les erreurs de mesure et les grandeurs non modélisées. Elle peut dépendre ou pas des variables cinématiques estimées.
- *Hₙ* = ((*Yₙ*)_{×} 0₃ - *I*₃), cette matrice d'observation permet de relier l'observation virtuelle ${{Y}^{˜}}_{n} = {T}_{n}^{T} \left({Y}_{n}-{X}_{n}\right)$ aux variables cinématiques du dispositif de navigation DISP. Elle est définie par le développement au premier ordre ${\hat{T}}_{\left.n\right| n - 1} \left({{Y}^{˜}}_{n}-{\hat{T}}_{\left.n\right| n - 1}^{T}\left({Y}_{n}-{\hat{X}}_{\left.n\right| n - 1}\right)\right) \approx {H}_{n} {ξ}_{\left.n\right| n - 1}$ où *ξ*_{*n*|*n*-1} est un vecteur construit de façon classique à partir du dernier jeu de variables d'erreur défini en page 3:
${ξ}_{\left.n\right| n - 1} = \left(\begin{matrix}log \left({e}_{T}\right) \\ {e}_{V} \\ {e}_{X}\end{matrix}\right) = \left(\begin{matrix}log \left({T}_{n}{\hat{T}}_{\left.n\right| n - 1}^{T}\right) \\ {V}_{n} - {T}_{n} {\hat{T}}_{\left.n\right| n - 1}^{T} {\hat{V}}_{\left.n\right| n - 1} \\ {X}_{n} - {T}_{n} {\hat{T}}_{\left.n\right| n - 1}^{T} {\hat{X}}_{\left.n\right| n - 1}\end{matrix}\right)$

Où log() désigne ici une fonction qui permet, à partir d'une matrice de rotation, d'obtenir un vecteur de rotation. Cette matrice d'observation se distingue de la matrice utilisée dans l'état de la technique car elle contient la valeur *Yₙ* de la mesure elle-même, ainsi *Hₙ* représente une matrice d'observation ou d'observation virtuelle dans le repère du porteur du dispositif de navigation DISP de la position du point indiqué par le GPS. L'observation virtuelle étant définie comme une mesure de la position dans le repère du porteur d'une balise située aux coordonnées mesurées par le dispositif de détermination d'une position. Ensuite l'homme du métier sait traiter cette position en utilisant une étape de mise à jour du filtrage de Kalman étendu ou invariant. Dans le cas où la mesure est une mesure de vitesse dans un repère fixe, issue par exemple d'un récepteur GPS, l'observation virtuelle est définie comme une mesure de la vitesse dans le repère du porteur d'un objet ayant dans un repère fixe la vitesse mesurée par le dispositif de détermination d'une vitesse et ayant dans un repère fixe la position estimée du porteur. Ensuite l'homme du métier sait traiter cette mesure de vitesse relative dans le repère du porteur en utilisant une étape de mise à jour du filtrage de Kalman étendu ou invariant.
- *Kₙ* est une matrice de gain transformant l'erreur sur le vecteur position en une correction à apporter sur les autres variables cinématiques. Cette matrice de gain *K* est déterminée à partir de la matrice d'observation
- *ds* est un vecteur de taille 9. Les trois premières composantes (*ds_{1:3}*) correspondent à l'erreur en rotation. Les trois composantes suivantes (*ds_{4:6}*) correspondent à l'erreur en vitesse. Les trois dernières composantes (*ds_{7:9}*) correspondent à l'erreur en position.

La détermination 203 d'une correction permet de déterminer l'écart de l'ensemble des variables cinématiques du dispositif de navigation à partir de la mesure d'uniquement l'une des variables cinématiques du dispositif.

Cette détermination de l'écart est réalisée par la matrice de gain *K,* qui prend en compte les incertitudes sur les variables cinématiques du dispositif de navigation DISP. S'il y a une incertitude faible, on tient compte de manière faible de la mesure de position *Yₙ* et, s'il y a une incertitude importante, on tient compte de manière importante de la mesure de position *Yₙ.*

La mise à jour 204 utilise la correction *ds* pour réaliser les équations suivantes : ${\hat{T}}_{n \left|n\right.} = R \left({ds}_{1 : 3}\right) {\hat{T}}_{n \left|n-1\right.}$ ${\hat{V}}_{n \left|n\right.} = R \left({ds}_{1 : 3}\right) {\hat{V}}_{n \left|n-1\right.} + {ds}_{4 : 6}$ ${\hat{X}}_{n \left|n\right.} = R \left({ds}_{1 : 3}\right) {\hat{X}}_{n \left|n-1\right.} + {ds}_{7 : 9}$ ${P}_{n \left|n\right.} = \left(I-{K}_{n}{H}_{n}\right) {P}_{n \left|n-1\right.}$
- *R* est une fonction qui permet, à partir d'un vecteur, d'obtenir une matrice de rotation du vecteur,
- *ds*_{1:3} est la partie du vecteur de correction relative à la mise à jour de l'orientation,
- *ds*_{4:6} est la partie du vecteur de correction relative à la mise à jour de la vitesse,
- *ds*_{7:9} est la partie du vecteur de correction relative à la mise à jour de la position
- *V̂*_{*n*|*n*} est le vecteur vitesse corrigé,
- *X̂*_{*n*|*n*} est le vecteur position corrigé,
- *T̂*_{*n*|*n*} est la matrice d'orientation corrigée,
- *P*_{*n*|*n*} est la matrice d'incertitude corrigée.

Dans un autre mode de réalisation la mise à jour 204 utilise la correction *ds* pour réaliser les équations suivantes : ${\hat{T}}_{n \left|n\right.} = R \left({ds}_{1 : 3}\right) {\hat{T}}_{n \left|n-1\right.}$ ${\hat{V}}_{n \left|n\right.} = R \left({ds}_{1 : 3}\right) {\hat{V}}_{n \left|n-1\right.} + V \left({ds}_{1 : 3}\right) {ds}_{4 : 6}$ ${\hat{X}}_{n \left|n\right.} = R \left({ds}_{1 : 3}\right) {\hat{X}}_{n \left|n-1\right.} + V \left({ds}_{1 : 3}\right) {ds}_{7 : 9}$ ${P}_{n \left|n\right.} = \left(I-{K}_{n}{H}_{n}\right) {P}_{n \left|n-1\right.}$

Avec $V \left(u\right) = {I}_{3} + \frac{\left(1-cos\left(\left‖u\right‖\right)\right)}{{\left‖u\right‖}^{2}} {\left(u\right)}_{\times } + \frac{\left(\left‖u\right‖-sin\left(\left‖u\right‖\right)\right)}{{\left‖u\right‖}^{3}} {{\left(u\right)}_{\times }}^{2}$, autrement dit on insère une matrice *V*(*ds*_{1:3}).

Les étapes 202 à 204 du procédé sont répétées tout au long de la navigation.

En particulier le vecteur vitesse corrigé *V̂*_{*n*|*n*} devient le prochain vecteur vitesse précédent, le vecteur position corrigé *X̂*_{*n*|*n*} devient le prochain vecteur vitesse précédent et la matrice d'orientation corrigée *T̂*_{*n*|*n*} devient la prochaine matrice d'orientation précédente.

Ce procédé permet donc la localisation du dispositif de navigation DISP et donc la navigation du porteur de ce dispositif. Le procédé offre une navigation plus précise en combinant toutes les mesures disponibles dans un même filtre.

Dans le cas d'un véhicule autonome soumis à une perte possible de disponibilité des capteurs l'objet offre aussi plus de sécurité.

Dans d'autres modes de réalisation on peut utiliser d'autres méthodes de recalage, par exemple
- filtre de Kalman étendu classique
- lissage sur fenêtre glissante
- filtre à gains constants
- filtre particulaire

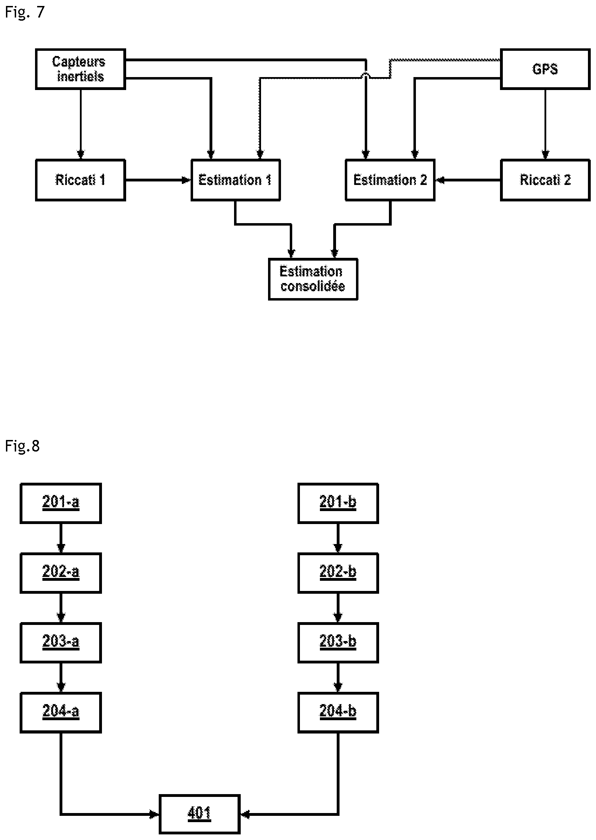

La figure 7 représente un autre de mode de réalisation du procédé de détermination de valeurs respectives de variables cinématiques du dispositif de navigation DISP. Dans ce mode de réalisation les étapes 202, 203 et 204 sont doublées en deux branches et réalisées en parallèles. Ensuite à différents instants les estimations de deux branches sont fusionnées. La figure 8 représente d'une autre manière ce mode de réalisation. Ainsi les branches restent indépendantes du début à la fin. On extrait à chaque instant les estimations des deux branches que l'on combine pour fournir une estimation consolidée mais cette estimation ne retournera jamais dans les branches. Elle est seulement fournie comme sortie.

Tel que représenté sur la figure 8 le procédé comprend :
- une détermination 202-a de premières valeurs courantes respectives de variables cinématiques d'un dispositif de navigation DISP, à partir de premières valeurs précédentes respectives des variables cinématiques,
- une détermination 203-a d'une première correction à partir :
- des premières valeurs courantes respectives des variables cinématiques et
- d'une première mesure d'une des premières variables cinématiques et
- d'une matrice de gain dépendant de la première mesure,
- une mise à jour 204-a des valeurs courantes respectives des variables cinématiques à partir de la correction.

La première mesure est généralement la position du dispositif de navigation DISP.

Le procédé de la figure 8 comprend également :
- une détermination 202-b de deuxièmes valeurs courantes respectives de variables cinématiques du dispositif de navigation DISP à partir de premières valeurs précédentes respectives de variables cinématiques du dispositif de navigation DISP,
- une détermination 203-b d'une deuxième correction à partir des deuxièmes valeurs courantes des variables cinématiques et à partir d'une deuxième mesure d'une des variables cinématiques, par exemple une mesure de position du dispositif de navigation DISP ou une mesure de vitesse du dispositif de navigation DISP et
- une mise à jour 204-b des deuxièmes valeurs courantes des variables cinématiques à partir de la deuxième correction.

Dans un mode de réalisation la première mesure et la deuxième mesure sont identiques. Dans ce cas le procédé permet d'avoir deux méthodes de fusion inertie-GPS différentes pour limiter les risques de panne non détectée.

Dans un mode de réalisation les branches utilisent des mesures différentes. Ces mesures peuvent provenir du même capteur et être utilisées alternativement par une branche ou par l'autre, ou provenir de deux capteurs différents.

Les étapes 202-a à 204-a sont les étapes de la première branche.

Les étapes 202-b à 204-b sont les étapes de la deuxième branche.

Enfin le procédé de la figure 8 comprend une étape de fusion 401. Cette fusion commence par un test de vraisemblance vérifiant les relations suivantes *p*(*ŝ*₂|*ŝ*₁, *P*₁) *> α* et *p*(*ŝ*₁|*ŝ*₂, *P*₂) > *α* où *p*(*s*|*s*₀, *P*₀) est la densité de la loi normale multivariée de moyenne *s*₀ et de matrice de covariance *P*₀ évaluée au point s et *α* est un seuil préalablement fixé. Autrement dit, ce test vérifié que chaque estimation accorde une forte probabilité à l'autre estimation. Si le test est positif on retourne l'estimation de l'une des deux branches, par exemple celle qui n'utilise pas l'invention.

L'étape 202-a utilise les équations suivantes : $\hat{V} {′}_{n \left|n-1\right.} = \hat{V} {′}_{n - 1 \left|n-1\right.} + dt . \left(\hat{T}{′}_{n - 1 \left|n-1\right.}{f}_{n}+{g}_{n}\right)$ $\hat{X} {′}_{n \left|n-1\right.} = \hat{X} {′}_{n - 1 \left|n-1\right.} + dt . \hat{V} {′}_{n - 1 \left|n-1\right.}$ $\hat{T} {′}_{n \left|n-1\right.} = \hat{T} {′}_{n - 1 \left|n-1\right.} {Ω}_{n}$ $P {′}_{n \left|n-1\right.} = F {′}_{n} P {′}_{n - 1 \left|n-1\right.} F {′}_{n}^{T} + Q {′}_{n}$

Avec :
- *V̂*'_{*n*|*n-*1} est le premier vecteur vitesse courant,
- *V̂*'_{*n-*1|*n-*1} est le premier vecteur vitesse précédent,
- *X̂'*_{*n*|*n*-1} est le premier vecteur position courant,
- *X̂'*_{*n*-1|*n*-1} est le premier vecteur position précédent,
- *T̂'*_{*n*|*n*-1} est la première matrice d'orientation courante,
- *T̂'*_{*n*-1|*n*-1} est la première matrice d'orientation précédente,
- *gₙ* est le modèle de la gravité subie par le dispositif de navigation DISP $F {′}_{n} = \left(\begin{matrix}{I}_{3} & {0}_{3} & {0}_{3} \\ dt {\left({g}_{n}\right)}_{\times } & {I}_{3} & {0}_{3} \\ {0}_{3} & dt . {I}_{3} & {I}_{3}\end{matrix}\right)$
- *Ωₙ* est la matrice de rotation
- *Qₙ* est une matrice de covariance représentant l'incertitude ajoutée par chaque étape de propagation des variables cinématiques. La source principale de cette incertitude est l'imprécision des mesures issues des accéléromètres et des gyroscopes. Les valeurs exactes à donner à *Qₙ* sont en général difficiles à choisir mais peuvent l'être à l'aide des spécifications fournies par le constructeur de la centrale.
- (*l*)_{×} correspond à une matrice antisymétrique réalisée avec les composantes du vecteur *l*, cette matrice est telle que pour tout vecteur *u* (*l*)_{×}*u* =*l* × *u*
   où × est un produit vectoriel.
- *P'*est une première matrice de covariance dont les valeurs de la diagonale représentent les incertitudes de chaque paramètre de l'état et dont les valeurs qui ne sont pas sur la diagonale représentent les incertitudes croisées entre les paramètres. *P*'_{*n*-1|*n*-1} est la première matrice d'incertitude précédente, *P'*_{*n*|*n*-1} est la première matrice d'incertitude courante.

L'étape 202-b utilise les équations suivantes : ${\hat{V "}}_{n \left|n-1\right.} = {\hat{V "}}_{n - 1 \left|n-1\right.} + dt . \left({\hat{T "}}_{n - 1 \left|n-1\right.}{f}_{n}+{g}_{n}\right)$ ${\hat{X "}}_{n \left|n-1\right.} = \hat{X} {"}_{n - 1 \left|n-1\right.} + dt . {\hat{V "}}_{n - 1 \left|n-1\right.}$ ${\hat{T "}}_{n \left|n-1\right.} = {\hat{T "}}_{n - 1 \left|n-1\right.} {Ω}_{n}$ $P {"}_{n \left|n-1\right.} = F {"}_{n} P {"}_{n - 1 \left|n-1\right.} F {"}_{n}^{T} + Q {"}_{n}$

Avec :
- *V̂"*_{*n*|*n*-1} est le deuxième vecteur vitesse courant,
- *V̂"*_{*n*-1|*n*-1} est le deuxième vecteur vitesse précédent,
- *X̂'*_{*n*|*n*-1} est le deuxième vecteur position courant,
- ${\hat{X "}}_{n - 1 \left|n-1\right.}$ est le deuxième vecteur position précédent,
- ${\hat{T "}}_{n \left|n-1\right.}$ est la deuxième matrice d'orientation courante,
- ${\hat{T "}}_{\left.n-1\right| n - 1}$ est la deuxième matrice d'orientation précédente,
- *gₙ* est un modèle de la gravité subie par le dispositif de navigation DISP $F {"}_{n} = \left(\begin{matrix}{Ω}_{n}^{T} & {0}_{3} & {0}_{3} \\ - dt . {Ω}_{n}^{T} {\left(f\right)}_{x} & {Ω}_{n}^{T} & {0}_{3} \\ {0}_{3} & dt . {Ω}_{n}^{T} & {Ω}_{{}^{n}}^{T}\end{matrix}\right) ,$
- *Ωₙ* **est la** matrice de rotation
- *Qₙ* est une matrice de covariance représentant l'incertitude ajoutée par chaque étape de propagation des variables cinématiques. La source principale de cette incertitude est l'imprécision des mesures issues des accéléromètres et des gyroscopes. Les valeurs exactes à donner à *Qₙ*
   sont en général difficiles à choisir mais peuvent l'être à l'aide des spécifications fournies par le constructeur de la centrale.
- (*l*)_{×} correspond à une matrice antisymétrique réalisée avec les composantes du vecteur *l*, cette matrice est telle que pour tout vecteur *u* (*l*)_{×}*u* = *l* × *u* où × est un produit vectoriel.
- *P"* est une deuxième matrice de covariance dont les valeurs de la diagonale représentent les incertitudes de chaque paramètre de l'état et dont les valeurs qui ne sont pas sur la diagonale représentent les incertitudes croisées entre les paramètres. *P"*_{*n-*1|*n*-1} est la deuxième matrice d'incertitude précédente, *P"*_{*n*|*n*-1} est la deuxième matrice d'incertitude courante.

L'étape 203-a de détermination de la première correction *ds'* utilise une mesure de la position du dispositif de navigation DISP, via les équations suivantes : ${z}_{n} = {\hat{X}}_{\left.n\right| n -1} ′ - {{Y}_{n}}^{′}$ ${K}^{′} {}_{n} = {P}^{′} {}_{n \left|n - 1\right.} {H}^{′} {}_{n}^{T} {\left({H}^{′} {}_{n} {P}^{′} {}_{n \left|n - 1\right.} {H}^{′} {}_{n}^{T} + {R}_{n} {}^{′}\right)}^{- 1}$ ${ds}^{′} = {{K}^{′}}_{n} {z}_{n}$ ${{H}^{′}}_{n} = \left({\left({Y}_{n}\right)}_{\times } {0}_{3} -{I}_{3}\right)$

Avec :
- *ds'* la première correction.
- *Yₙ'* la position fournie par le dispositif de mesure d'une position 103-a.
- *Rₙ'*
une matrice de covariance utilisée pour représenter les erreurs de mesure et les grandeurs non modélisées. Elle peut dépendre ou pas des variables cinématiques estimées.
- *Hₙ* = ((*Yₙ*)_{×} 0₃ -*I*₃), cette matrice d'observation permet de relier l'observation virtuelle ${{Y}^{˜}}_{n} = {T}_{n}^{T} \left({Y}_{n}-{X}_{n}\right)$ aux variables cinématiques du dispositif de navigation DISP. Elle est définie par le développement au premier ordre ${\hat{T}}_{\left.n\right| n - 1} \left({{Y}^{˜}}_{n}-{\hat{T}}_{\left.n\right| n - 1}^{T}\left({Y}_{n}-{\hat{X}}_{\left.n\right| n - 1}\right)\right) \approx {H}_{n} {ξ}_{\left.n\right| n - 1}$ où *ξ*_{*n*|*n*-1} est un vecteur construit de façon classique à partir du dernier jeu de variables d'erreur défini en page 3 : ${ξ}_{\left.n\right| n - 1} = \left(\begin{matrix}log \left({e}_{T}\right) \\ {e}_{V} \\ {e}_{X}\end{matrix}\right) = \left(\begin{matrix}log \left({T}_{n}{\hat{T}}_{\left.n\right| n - 1}^{T}\right) \\ {V}_{n} - {T}_{n} {\hat{T}}_{\left.n\right| n - 1}^{T} {\hat{V}}_{\left.n\right| n - 1} \\ {X}_{n} - {T}_{n} {\hat{T}}_{\left.n\right| n - 1}^{T} {\hat{X}}_{\left.n\right| n - 1}\end{matrix}\right)$

Où log() désigne ici une fonction qui permet, à partir d'une matrice de rotation, d'obtenir un vecteur de rotation. Cette matrice d'observation se distingue de la matrice utilisée dans l'état de la technique car elle contient la valeur *Yₙ* de la mesure elle-même, ainsi *Hₙ* représente une matrice d'observation ou d'observation virtuelle dans le repère du porteur du dispositif de navigation DISP de la position du point indiqué par le GPS. L'observation virtuelle étant définie comme une mesure de la position dans le repère du porteur d'une balise située aux coordonnées mesurées par le dispositif de détermination d'une position. Ensuite l'homme du métier sait traiter cette position en utilisant une étape de mise à jour du filtrage de Kalman étendu ou invariant. Dans le cas où la mesure est une mesure de vitesse dans un repère fixe, issue par exemple d'un récepteur GPS, l'observation virtuelle est définie comme une mesure de la vitesse dans le repère du porteur d'un objet ayant dans un repère fixe la vitesse mesurée par le dispositif de détermination d'une vitesse et ayant dans un repère fixe la position estimée du porteur. Ensuite l'homme du métier sait traiter cette mesure de vitesse relative dans le repère du porteur en utilisant une étape de mise à jour du filtrage de Kalman étendu ou invariant.
- *K'ₙ* est une première matrice de gain transformant l'erreur sur le vecteur position en une correction à apporter sur les autres variables cinématiques.

L'étape 203-b de détermination de la deuxième correction *ds*" utilise une mesure de la position du dispositif de navigation DISP, via les équations suivantes : ${z}_{n} = {\hat{T}}_{\left.n\right| n - 1}^{" T} \left({Y}_{n}"-\hat{X}{"}_{\left.n\right| n - 1}\right)$ $K {"}_{n} = P {"}_{n \left|n-1\right.} H {"}_{n}^{T} {\left(H{"}_{n}P{"}_{n \left|n-1\right.}H{"}_{n}^{T}+{R}_{n}"\right)}^{- 1}$ $ds " = K {"}_{n} {z}_{n}$

Avec :
- *ds"* la deuxième correction.
- *Yₙ"* la position fournie par le dispositif de mesure d'une position 103-b.
- *Rₙ"* une matrice de covariance utilisée pour représenter les erreurs de mesure et les grandeurs non modélisées. Elle peut dépendre ou pas des variables cinématiques estimées.
- $H {"}_{n} = \left({0}_{3} {0}_{3} {I}_{3}\right)$ matrice d'observation qui permet de relier les variations de position mesurée *Yₙ*
   aux variables d'erreur cinématiques du dispositif de navigation DISP. La mesure *Yₙ* n'apparaît pas dans *Hₙ'*
- *K"ₙ* est une matrice de gain transformant l'erreur sur le vecteur position en une correction à apporter sur les autres variables cinématiques.
*ds'* et *ds"* sont des vecteurs de taille 9. Les trois premières composantes (*ds'_{1:3}* et *ds"_{1:3}*) correspondent à l'erreur en rotation. Les trois composantes suivantes (*ds'_{4:6}* et *ds"_{4:6}*) correspondent à l'erreur en vitesse. Les trois dernières composantes (*ds'_{7:9}* et *ds"_{7:9}*) correspondent à l'erreur en position.

Les matrices *K'ₙ* et *K"ₙ* sont connues sous le nom de matrices de gain.

L'étape 204-a utilise les équations suivantes : $\hat{T} {′}_{n \left|n\right.} = R \left(ds{′}_{1 : 3}\right) \hat{T} {′}_{n \left|n-1\right.}$ $\hat{V} {′}_{n \left|n\right.} = R \left(ds{′}_{1 : 3}\right) \hat{V} {′}_{n \left|n-1\right.} + ds {′}_{4 : 6}$ $\hat{X} {′}_{n \left|n\right.} = R \left(ds{"}_{1 : 3}\right) \hat{X} {′}_{n \left|n-1\right.} + ds {′}_{7 : 9}$ $P {′}_{n \left|n\right.} = \left(I-K{′}_{n}H{′}_{n}\right) P {′}_{n \left|n-1\right.}$
- *R* est une fonction qui permet, à partir d'un vecteur, d'obtenir une matrice de rotation du vecteur,
- *ds'*_{1:3} est la partie du premier vecteur de correction relative à la mise à jour de l'orientation,
- *ds'*_{4:6} est la partie du premier vecteur de correction relative à la mise à jour de la vitesse,
- *ds'*_{7:9} est la partie du premier vecteur de correction relative à la mise à jour de la position
- *V̂'*_{*n*|*n*} est le premier vecteur vitesse corrigé,
- *X̂'*_{*n*|*n*} est le premier vecteur position corrigé,
- *T̂'*_{*n*|*n*} est la première matrice d'orientation corrigée,
- *P'*_{*n*|*n*} est la première matrice d'incertitude corrigée.

L'étape 204-b utilise les équations suivantes : ${\hat{T}}_{n \left|n\right.}^{′} = {\hat{T}}_{n \left|n-1\right.} ′ R \left({ds}_{1 : 3}^{′}\right)$ ${\hat{V}}_{n \left|n\right.}^{′} = {\hat{V}}_{n \left|n-1\right.}^{′} + {\hat{T}}_{n \left|n-1\right.}^{′} {ds}_{4 : 6}^{′}$ ${\hat{X}}_{n \left|n\right.}^{′} = {\hat{X}}_{n \left|n-1\right.}^{′} + {\hat{T}}_{n \left|n-1\right.}^{′} {ds}_{7 : 9}^{′}$ ${P}_{n \left|n\right.}^{′} = \left(I-{K}_{n}^{′}{H}_{n}^{′}\right) {P}_{n \left|n-1\right.}^{′}$
- *R* est une fonction qui permet, à partir d'un vecteur, d'obtenir une matrice de rotation du vecteur,
- *ds"*_{1:3} est la partie du deuxième vecteur de correction relative à la mise à jour de l'orientation,
- *ds"*_{4:6} est la partie du deuxième vecteur de correction relative à la mise à jour de la vitesse,
- *ds"*_{7:9} est la partie du deuxième vecteur de correction relative à la mise à jour de la position
- ${\hat{V "}}_{n \left|n\right.}$ est le deuxième vecteur vitesse corrigé,
- ${\hat{X "}}_{n \left|n\right.}$ est le deuxième vecteur position corrigé,
- ${\hat{T "}}_{n \left|n\right.}$ est la deuxième matrice d'orientation corrigée,
- *P"*_{*n*|*n*} est la deuxième matrice d'incertitude corrigée.

La fusion 401 permet la détermination de valeurs consolidées respectives des variables cinématiques. Cette détermination peut par exemple être réalisée une moyenne pondérée du premier vecteur position corrigé avec le deuxième vecteur position corrigé, du premier vecteur vitesse corrigé avec le deuxième vecteur vitesse corrigé et de la première matrice d'orientation corrigée avec la deuxième matrice d'orientation corrigée.

Cette étape 401 peut aussi mettre en œuvre un test statistique vérifiant la similitude ou consistance des deux estimateurs pour obtenir un estimateur de meilleure intégrité qu'un filtre de Kalman classique. Le test de vraisemblance vérifierait les relations suivantes $p \left(Δs"\left|0, {P}_{n \left|n\right.}^{"}\right.\right) > α$*α* et $p \left(Δs′\left|0, {P}_{n \left|n\right.}^{′}\right.\right) > α$ où *Δs'* (resp. *Δs"*) est un vecteur représentatif de l'écart entre les deux états de navigation issus des branches a et b exprimé dans le même système de coordonnées que *P'* (resp. *P' '* ), *p*(*s*|0, *P*) est la densité de la loi normale multivariée centrée de matrice de covariance *P,* évaluée au point *s*, et *α* est un seuil préalablement fixé. L'écart Δ*s* peut être par exemple l'erreur logarithmique caractéristique du filtrage invariant. On peut résumer ce test en disant qu'il vérifie que chaque estimation accorde une forte probabilité à l'autre estimation.

Un autre test possible consiste à calculer un écart entre les deux lois normales retournées par les deux filtres, cet écart étant par exemple la divergence de Kullback-Leibler définie par la formule : $\frac{1}{2} \left(tr\left(P{′}^{- 1}{P}^{˜}"\right)+Δs{′}^{T}P{′}^{- 1}Δs′-k-ln\left(\frac{det \left(P′\right)}{det \left({P}^{˜}"\right)}\right)\right)$

Où tr() est la fonction trace, *k* est la dimension de l'état du système (k=9 si seules les orientations, vitesses et positions sont estimées), In() désigne la fonction logarithme, det() la fonction déterminant, *P̃"*
est la matrice *P"*
écrite dans le même système de coordonnées que *P'* (les deux filtres de Kalman des branches a et b sont différents et peuvent donc représenter leurs erreurs dans des systèmes de coordonnées différents).
Alternativement, on peut permuter les rôles de *P'*
et P" : $\frac{1}{2} \left(tr\left(P{"}^{- 1}{P}^{˜}′\right)+Δs{"}^{T}P{"}^{- 1}Δs"-k-ln\left(\frac{det \left(P"\right)}{det \left({P}^{˜}′\right)}\right)\right)$

Le test sera positif si l'écart ainsi défini reste inférieur à un seuil préalablement fixé.

Si le test est positif on retourne l'estimation de l'une des deux branches, par exemple celle qui n'utilise pas l'invention. On peut aussi retourner la moyenne des variables cinématiques estimées par les deux branches. Une autre possibilité est de partir de l'état *s'* et de définir une correction *δs'* = *P'*[*P' + P̃"*]⁻¹Δ*s'* qui sera apportée à s' par les mêmes formules que la correction *ds'* de l'étape de mise à jour.

Symétriquement, on peut partir de l'état *ds"* et définir une correction *δs"* = *P"*[*P" + P̃'*]⁻¹Δ*s"* qui sera apportée à s" par les mêmes formules que la correction *ds"* de l'étape de mise à jour.

Si les premières valeurs et les deuxièmes valeurs sont cohérentes on peut retourner par exemples :
- Une moyenne des premières valeurs et des deuxièmes valeurs,
- Une moyenne des premières valeurs et des deuxièmes valeurs pondérées,
- Simplement les premières valeurs ou les deuxièmes valeurs.

En comparant l'équation de Riccati de la première branche (étapes 202-a à 204-a) et de la deuxième branche (étapes 202-b à 204-b) on observe que :
- celle de la première branche fait apparaître les mesures GPS mais pas les incréments inertiels,
- celle de la deuxième branche fait apparaître les incréments inertiels mais pas les mesures GPS.

La première branche sera donc spécialement robuste aux erreurs inertielles et la seconde aux erreurs GPS. Ceci rend l'utilisation d'un test statistique vérifiant la similitude ou consistance particulièrement avantageux.

## Revendications

1. Procédé d'aide à la navigation d'un véhicule doté d'un dispositif de navigation (DISP) comprenant les étapes suivantes :
- acquisition (201) de valeurs a priori de variables cinématiques du dispositif de navigation (DISP),
- détermination (202) à l'aide d'un filtre de Kalman de valeurs courantes respectives de variables cinématiques du dispositif de navigation (DISP) et d'une matrice d'incertitude courante représentative d'une incertitude des valeurs courantes respectives des variables cinématiques, à partir de valeurs précédentes respectives des variables cinématiques, les variables cinématiques comprenant une position du dispositif de navigation (DISP) dont une valeur courante est un vecteur position courant et une valeur précédente est un vecteur position précédent,
- détermination (203) d'une correction à partir :
- des valeurs courantes respectives des variables cinématiques,
- d'une matrice d'incertitude courante représentative d'une incertitude des valeurs courantes respectives des variables cinématiques,
- d'une mesure inertielle d'une des variables cinématiques,
- d'une matrice de gain dépendant de la mesure inertielle,
- mise à jour (204) à l'aide du filtre de Kalman des valeurs courantes respectives des variables cinématiques à partir de la correction et de la matrice d'incertitude courante, **caractérisé en ce que** le procédé comprend par ailleurs les étapes suivantes :
- détermination d'une fonction d'observation virtuelle à partir de la mesure inertielle,
- obtention d'une matrice d'observation en appliquant un développement limité au premier ordre à la fonction d'observation virtuelle,
- obtention de la matrice de gain à partir de la matrice d'observation.

2. Procédé selon la revendication précédente, dans lequel la mesure inertielle est une mesure de position du véhicule.

3. Procédé selon l'une des revendications précédentes, dans lequel la matrice d'observation présente la forme suivante ${H}_{n} = \left({\left({Y}_{n}\right)}_{\times } {0}_{3} -{I}_{3}\right)$ où Yn est la mesure inertielle.

4. Procédé selon l'une des revendications précédentes, les variables cinématiques comprenant :
- une orientation du dispositif de navigation (DISP) dont une valeur courante est une matrice d'orientation courante et dont une valeur précédente est une matrice d'orientation précédente,
- une vitesse du dispositif de navigation (DISP) dont une valeur courante est un vecteur vitesse courant et une valeur précédente est un vecteur vitesse précédent,
la matrice d'incertitude courante étant représentative d'une incertitude de la matrice d'orientation courante, du vecteur vitesse courant et du vecteur position courant, et
la matrice d'incertitude précédente étant représentative d'une incertitude de la matrice d'orientation précédente, du vecteur vitesse précédent et du vecteur position précédent, et
dans lequel les valeurs courantes étant associées à un instant courant et les valeurs précédentes étant associées un instant précédent, la détermination (202) des valeurs courantes des variables cinématiques comprend :
- une détermination du vecteur vitesse courant par ajout au vecteur vitesse précédent d'une intégration, sur un intervalle temporel compris entre l'instant précédent et l'instant courant, d'une somme d'une force spécifique du dispositif de navigation (DISP) et d'un modèle d'une gravité terrestre subie par le dispositif de navigation (DISP),
- une détermination du vecteur de position courant par ajout au vecteur de position précédent d'une intégration, sur l'intervalle temporel, du vecteur vitesse précédent,
- une détermination de la matrice d'orientation courante par multiplication de la matrice d'orientation précédente avec une matrice représentative d'une rotation du dispositif de navigation (DISP).

5. Procédé selon la revendication 4, la détermination (202) des valeurs courantes des variables cinématiques comprenant :
- une détermination de la matrice d'incertitude courante à partir de la matrice d'incertitude précédente.

6. Procédé selon l'une des revendications 4 et 5, la mesure inertielle étant une mesure de la position du dispositif de navigation (DISP), la détermination (203) de la correction comprenant :
- une soustraction du vecteur position courant et la mesure de la position, et
- une multiplication de la soustraction par la matrice de gain.

7. Procédé selon l'une des revendications 4 à 6, la correction étant un vecteur de correction, la mise à jour (204) comprenant :
- une sous-étape de mise à jour de la matrice d'orientation courante par multiplication d'une matrice de rotation d'une première partie du vecteur de correction et de la matrice d'orientation courante,
- une sous-étape de mise à jour du vecteur de vitesse courant par ajout à une deuxième partie du vecteur de correction d'une multiplication de la matrice de rotation de la première partie du vecteur de correction et du vecteur de vitesse courante, et/ou
- une sous-étape de mise à jour du vecteur de position courant par ajout à une troisième partie du vecteur de correction d'une multiplication de la matrice de rotation de la première partie du vecteur de correction et du vecteur de position courant.

8. Procédé selon l'une des revendications 4 à 7,
les valeurs courantes respectives des variables cinématiques étant des premières valeurs courantes respectives des variables cinématiques,
les valeurs précédentes respectives des variables cinématiques étant des premières valeurs précédentes respectives des variables cinématiques,
la correction étant une première correction,
la première mesure d'une des variables cinématiques étant une première mesure d'une des variables cinématiques,
la matrice de gain étant une première matrice de gain,
le procédé comprenant en outre:
- une détermination (202-b) de deuxièmes valeurs courantes respectives des variables cinématiques d'un dispositif de navigation (DISP), à partir de deuxièmes valeurs précédentes respectives des variables cinématiques,
- une détermination (203-b) d'une deuxième correction à partir :
- des deuxièmes valeurs courantes respectives des variables cinématiques,
- d'une deuxième mesure d'une des variables cinématiques et
- d'une deuxième matrice de gain,
- une mise à jour (204-b) des deuxièmes valeurs courantes respectives des variables cinématiques à partir de la deuxième correction.

9. Procédé selon la revendication 8 comprenant en outre une détermination (401) de valeurs consolidées respectives des variables cinématiques à partir des premières valeurs courantes respectives des variables cinématiques et des deuxièmes valeurs courantes respectives des variables cinématiques.

10. Procédé selon la revendication 9, la détermination (401) de valeurs consolidées respectives des variables cinématiques comprenant une détermination d'une similitude entre les premières valeurs corrigées et les deuxièmes valeurs corrigées et lorsque la similitude dépasse un seuil la détermination (401) comprend
- un moyennage des premières valeurs corrigées et des deuxièmes valeurs corrigées ou
- un moyennage pondéré des premières valeurs corrigées et des deuxièmes valeurs corrigées ou
- une sélection des premières valeurs corrigées ou des deuxièmes valeurs corrigées.

11. Dispositif de navigation (DISP) comprenant :
- une unité de traitement (UNIT),
- trois accéléromètres (101-a à 101-c),
- trois gyroscopes (102-a à 102-c) et
- un dispositif de mesure inertielle (103-a) d'une position du dispositif de navigation (DISP),
l'unité de traitement (UNIT) étant configurée pour la mise en œuvre du procédé d'aide à la navigation selon l'une des revendications 1 à 10.

12. Produit programme d'ordinateur comprenant des instructions de code de programme pour l'exécution des étapes du procédé d'aide à la navigation selon l'une des revendications 1 à 10, lorsque celui-ci est exécuté par un processeur.

## Patentansprüche

1. Verfahren zur Unterstützung der Navigation eines mit einer Navigationsvorrichtung (DISP) ausgestatteten Fahrzeugs, das die folgenden Schritte umfasst:
- Erfassen (201) von A-priori-Werten kinematischer Variablen der Navigationsvorrichtung (DISP),
- Bestimmen (202), mit Hilfe eines Kalman-Filters, jeweiliger aktueller Werte kinematischer Variablen der Navigationsvorrichtung (DISP) und einer aktuellen Unsicherheitsmatrix, die für eine Unsicherheit der jeweiligen aktuellen Werte der kinematischen Variablen repräsentativ ist, auf Basis jeweiliger vorheriger Werte der kinematischen Variablen, wobei die kinematischen Variablen eine Position der Navigationsvorrichtung (DISP) umfassen, von denen ein aktueller Wert ein aktueller Positionsvektor ist und ein vorheriger Wert ein vorheriger Positionsvektor ist,
- Bestimmen (203) einer Korrektur auf Basis:
- der jeweiligen aktuellen Werte der kinematischen Variablen,
- einer aktuellen Unsicherheitsmatrix, die für eine Unsicherheit der jeweiligen aktuellen Werte der kinematischen Variablen repräsentativ ist,
- einer Trägheitsmessung einer der kinematischen Variablen,
- einer von der Trägheitsmessung abhängigen Verstärkungsmatrix,
- Aktualisieren (204) der jeweiligen aktuellen Werte der kinematischen Variablen auf Basis der Korrektur und der aktuellen Unsicherheitsmatrix mit Hilfe des Kalman-Filters,
**dadurch gekennzeichnet, dass** das Verfahren ferner die folgenden Schritte umfasst:
- Bestimmen einer virtuellen Beobachtungsfunktion auf Basis der Trägheitsmessung,
- Erhalten einer Beobachtungsmatrix durch Anwendung einer beschränkten Entwicklung erster Ordnung auf die virtuelle Beobachtungsfunktion,
- Erhalten der Verstärkungsmatrix auf Basis der Beobachtungsmatrix.

2. Verfahren nach vorhergehendem Anspruch, wobei die Trägheitsmessung eine Positionsmessung des Fahrzeugs ist.

3. Verfahren nach einem der vorhergehenden Ansprüche, wobei die Beobachtungsmatrix die folgende Form aufweist ${H}_{n} = \left({\left({Y}_{n}\right)}_{x} {0}_{3} -{I}_{3}\right)$ wobei Yn die Trägheitsmessung ist.

4. Verfahren nach einem der vorhergehenden Ansprüche, wobei die kinematischen Variablen umfassen:
- eine Orientierung der Navigationsvorrichtung (DISP), von der ein aktueller Wert eine aktuelle Orientierungsmatrix ist und von der ein vorheriger Wert eine vorherige Orientierungsmatrix ist,
- eine Geschwindigkeit der Navigationsvorrichtung (DISP), von der ein aktueller Wert ein aktueller Geschwindigkeitsvektor ist und ein vorheriger Wert ein vorheriger Geschwindigkeitsvektor ist,
wobei die aktuelle Unsicherheitsmatrix für eine Unsicherheit der aktuellen Orientierungsmatrix, des aktuellen Geschwindigkeitsvektors und des aktuellen Positionsvektors repräsentativ ist, und wobei die vorherige Unsicherheitsmatrix für eine Unsicherheit der vorherigen Orientierungsmatrix, des vorherigen Geschwindigkeitsvektors und des vorherigen Positionsvektors repräsentativ ist, und
wobei die aktuellen Werte einem aktuellen Zeitpunkt zugeordnet sind und die vorherigen Werte einem vorherigen Zeitpunkt zugeordnet sind, wobei die Bestimmung (202) der aktuellen Werte der kinematischen Variablen umfasst:
- eine Bestimmung des aktuellen Geschwindigkeitsvektors durch Hinzufügen zu dem vorherigen Geschwindigkeitsvektor einer Integration einer Summe einer spezifischen Kraft der Navigationsvorrichtung (DISP) und eines Modells einer von der Navigationsvorrichtung (DISP) erfahrenen Erdgravitation über ein Zeitintervall zwischen dem vorherigen Zeitpunkt und dem aktuellen Zeitpunkt,
- eine Bestimmung des aktuellen Positionsvektors durch Hinzufügen zu dem vorherigen Geschwindigkeitsvektor einer Integration des vorherigen Positionsvektor über das Zeitintervall,
- eine Bestimmung der aktuellen Orientierungsmatrix durch Multiplikation der vorherigen Orientierungsmatrix mit einer Matrix, die für eine Rotation der Navigationsvorrichtung (DISP) repräsentativ ist.

5. Verfahren nach Anspruch 4, wobei die Bestimmung (202) der aktuellen Werte der kinematischen Variablen umfasst:
- eine Bestimmung der aktuellen Unsicherheitsmatrix auf Basis der vorherigen Unsicherheitsmatrix.

6. Verfahren nach einem der Ansprüche 4 und 5, wobei die Trägheitsmessung eine Messung der Position der Navigationsvorrichtung (DISP) ist, wobei die Bestimmung (203) der Korrektur umfasst:
- eine Subtraktion des aktuellen Positionsvektors und die Positionsmessung, und
- eine Multiplikation der Subtraktion mit der Verstärkungsmatrix.

7. Verfahren nach einem der Ansprüche 4 bis 6, wobei die Korrektur ein Korrekturvektor ist, wobei die Aktualisierung (204) umfasst:
- einen Teilschritt der Aktualisierung der aktuellen Orientierungsmatrix durch Multiplikation einer Rotationsmatrix eines ersten Teils des Korrekturvektors und der aktuellen Orientierungsmatrix,
- einen Teilschritt der Aktualisierung des aktuellen Geschwindigkeitsvektors durch Hinzufügen einer Multiplikation der Rotationsmatrix des ersten Teils des Korrekturvektors und des aktuellen Geschwindigkeitsvektors zu einem zweiten Teil des Korrekturvektors, und/oder
- einen Teilschritt der Aktualisierung des aktuellen Positionsvektors durch Hinzufügen einer Multiplikation der Rotationsmatrix des ersten Teils des Korrekturvektors und des aktuellen Positionsvektors zu einem dritten Teil des Korrekturvektors.

8. Verfahren nach einem der Ansprüche 4 bis 7,
wobei die jeweiligen aktuellen Werte der kinematischen Variablen jeweilige erste aktuelle Werte der kinematischen Variablen sind,
wobei die jeweiligen vorherigen Werte der kinematischen Variablen jeweilige erste vorherige Werte der kinematischen Variablen sind,
wobei die Korrektur eine erste Korrektur ist, wobei die erste Messung einer der kinematischen Variablen eine erste Messung einer der kinematischen Variablen ist,
wobei die Verstärkungsmatrix eine erste Verstärkungsmatrix ist,
wobei das Verfahren ferner umfasst:
- eine Bestimmung (202-b) jeweiliger zweiter aktueller Werte der kinematischen Variablen einer Navigationsvorrichtung (DISP) auf Basis jeweiliger zweiter vorheriger Werte der kinematischen Variablen,
- eine Bestimmung (203-b) einer zweiten Korrektur auf Basis:
- der jeweiligen zweiten aktuellen Werte der kinematischen Variablen,
- einer zweiten Messung einer der kinematischen Variablen und
- einer zweiten Verstärkungsmatrix,
- eine Aktualisierung (204-b) der jeweiligen zweiten aktuellen Werte der kinematischen Variablen auf Basis der zweiten Korrektur.

9. Verfahren nach Anspruch 8, das ferner eine Bestimmung (401) jeweiliger konsolidierter Werte der kinematischen Variablen auf Basis der jeweiligen ersten aktuellen Werte der kinematischen Variablen und der jeweiligen zweiten aktuellen Werte der kinematischen Variablen umfasst.

10. Verfahren nach Anspruch 9, wobei die Bestimmung (401) jeweiliger konsolidierter Werte der kinematischen Variablen eine Bestimmung einer Ähnlichkeit zwischen den ersten korrigierten Werten und den zweiten korrigierten Werten umfasst und wenn die Ähnlichkeit einen Schwellenwert überschreitet, umfasst die Bestimmung (401)
- eine Mittelwertbildung der ersten korrigierten Werte und der zweiten korrigierten Werte oder
- eine gewichtete Mittelwertbildung der ersten korrigierten Werte und der zweiten korrigierten Werte oder
- eine Auswahl der ersten korrigierten Werte oder der zweiten korrigierten Werte.

11. Navigationsvorrichtung (DISP), umfassend:
- eine Verarbeitungseinheit (UNIT),
- drei Beschleunigungsmesser (101-a bis 101-c),
- drei Gyroskope (102-a bis 102-c) und
- eine Trägheitsmessvorrichtung (103-a) einer Position der Navigationsvorrichtung (DISP),
wobei die Verarbeitungseinheit (UNIT) zur Durchführung des Verfahrens zur Unterstützung der Navigation nach einem der Ansprüche 1 bis 10 konfiguriert ist.

12. Computerprogrammprodukt, das Programmcodeanweisungen zur Ausführung der Schritte des Verfahrens zur Unterstützung der Navigation nach einem der Ansprüche 1 bis 10 umfasst, wenn es von einem Prozessor ausgeführt wird.

## Claims

1. A method for assisting with the navigation of a vehicle equipped with a navigation device (DISP) comprising the following steps:
- acquiring (201) a priori values of kinematic variables of the navigation device (DISP),
- determining (202) using a Kalman filter respective current values of kinematic variables of the navigation device (DISP) and a current uncertainty matrix representative of an uncertainty of the respective current values of the kinematic variables, from respective preceding values of the kinematic variables,
- determining (203) a correction from:
- respective current values of the kinematic variables,
- a current uncertainty matrix representative of an uncertainty of the respective current values of the kinematic variables,
- a measurement of one of the kinematic variables,
- a gain matrix dependent on the measurement,
- updating (204) the respective current values of the kinematic variables on the basis of the correction and the current uncertainty matrix, **characterized in that** the method further comprises the following steps:
- determining a virtual observation function on the basis of the measurement,
- obtaining an observation matrix by applying a limited first-order expansion to the virtual observation function,
- obtaining the gain matrix on the basis of the observation matrix.

2. The method according to the preceding claim, wherein the measurement is a measurement of position of the vehicle.

3. The method according to one of the preceding claims, wherein the observation matrix has the following form ${H}_{n} = \left({\left({Y}_{n}\right)}_{\times } {0}_{3} -{I}_{3}\right)$ where Yn is the measurement.

4. The method according to one of the preceding claims, the kinematic variables comprising:
- an orientation of the navigation device (DISP), a current value of which is a current orientation matrix and a preceding value of which is a preceding orientation matrix,
- a velocity of the navigation device (DISP), a current value of which is a current velocity vector and a preceding value of which is a preceding velocity vector and
- a position of the navigation device (DISP), a current value of which is a current position vector and a preceding value of which is a preceding position vector,
the current uncertainty matrix being representative of an uncertainty of the current orientation matrix, the current velocity vector and the current position vector, and
the preceding uncertainty matrix being representative of an uncertainty of the preceding orientation matrix, the preceding velocity vector and the preceding position vector, and
wherein the current values are associated with a current time, and the preceding values are associated with a preceding time, the determining (202) of the current values of the kinematic variables comprising:
- determining the current velocity vector by addition, to the preceding velocity vector, of an integration over a time interval between the preceding time and the current time, of a sum of a force specific to the navigation device (DISP) and a model of Earth gravity experienced by the navigation device (DISP),
- determining the current position vector by addition, to the preceding position vector, of an integration over the time interval, of the preceding velocity vector,
- determining the current orientation matrix by multiplication of the preceding orientation matrix with a matrix representative of a rotation of the navigation device (DISP).

5. The method according to claim 4, the determining (202) of the current values of the kinematic variables comprising:
- determining the current uncertainty matrix on the basis of the preceding uncertainty matrix.

6. The method according to one of claims 4 and 5, the measurement being a measurement of the position of the navigation device (DISP), the determining (203) of the correction comprising:
- a subtraction of the current position vector and the measurement of the position, and
- multiplying the subtraction by the gain matrix.

7. The method according to one of claims 4 to 6, the correction being a correction vector, the updating (204) comprising:
- a substep of updating the current orientation matrix by multiplication of a rotation matrix of a first part of the correction vector and the current orientation matrix,
- a substep of updating of the current velocity vector by adding, to a second part of the correction vector, a multiplication of the rotation matrix of the first part of the correction vector and the current velocity vector, and/or
- a substep of updating the current position vector by addition, to a third part of the correction vector, of a multiplication of the rotation matrix of the first part of the correction vector and the current position vector.

8. The method according to one of claims 4 to 7,
the respective current values of the kinematic variables being first respective current values of the kinematic variables,
the respective preceding values of the kinematic variables being first respective preceding values of the kinematic variables,
the correction being a first correction,
the first measurement of one of the kinematic variables being a first measurement of one of the kinematic variables,
the gain matrix being a first gain matrix,
the method further comprising:
- determining (202-b) second respective current values of the kinematic variables of a navigation device (DISP), on the basis of second respective preceding values of the kinematic variables,
- determining (203-b) a second correction from:
- second respective current values of the kinematic variables,
- a second measurement of one of the kinematic variables and
- a second gain matrix,
- updating (204-b) the second respective current values of the kinematic variables on the basis of the second correction.

9. The method according to claim 8 further comprising determining (401) respective consolidated values of the kinematic variables from first respective current values of the kinematic variables and second respective current values of the kinematic variables.

10. The method according to claim 10, the determining (401) of respective consolidated values of the kinematic variables comprising determining a similarity between the first corrected values and the second corrected values and, when the similarity exceeds a threshold, the determination (401) comprises
- averaging the first corrected values and the second corrected values or
- weighted averaging of the first corrected values and the second corrected values or
- selecting the first corrected values or the second corrected values.

11. A navigation device (DISP) comprising:
- a processing unit (UNIT),
- three accelerometers (101-a to 101-c),
- three gyroscopes (102-a to 102-c) and
- a measurement device (103-a) of a position of the navigation device (DISP),
the processing unit (UNIT) being configured to implement the method for assisting with the navigation according to one of claims 1 to 10.

12. A computer program product comprising program code instructions for executing the steps of the method for assisting with the navigation according to one of claims 1 to 10, when this is executed by a processor.
